(19)

**Europäisches Patentamt**
**European Patent Office**
**Office européen des brevets**

(11)  **EP 4 707 042 A1**

(12)  **EUROPEAN PATENT APPLICATION**

(43) Date of publication:
     **11.03.2026  Bulletin 2026/11**

(51) International Patent Classification (IPC):
     **B60L 53/00** (2019.01)    **B60L 53/12** (2019.01)
     **B60L 53/122** (2019.01)   **B60L 53/126** (2019.01)
     **B60L 53/36** (2019.01)    **B60L 53/38** (2019.01)
     **H02J 50/12** (2016.01)    **H02J 50/80** (2016.01)
     **H02J 50/90** (2016.01)

(21) Application number: **25200064.1**

(22) Date of filing: **04.09.2025**

(52) Cooperative Patent Classification (CPC):
     **H02J 50/12; B60L 53/00; B60L 53/12;**
     **B60L 53/122; B60L 53/126; B60L 53/36;**
     **B60L 53/38; H02J 50/80; H02J 50/90**

(84) Designated Contracting States:
     **AL AT BE BG CH CY CZ DE DK EE ES FI FR GB**
     **GR HR HU IE IS IT LI LT LU LV MC ME MK MT NL**
     **NO PL PT RO RS SE SI SK SM TR**
     Designated Extension States:
     **BA**
     Designated Validation States:
     **GE KH LA MA MD TN**

(30) Priority:  **09.09.2024  US 202463692435 P**

(71) Applicant: **Tesla, Inc.**
     **Austin, TX 78725 (US)**

(72) Inventors:
     • **ANDROS, Carl**
       **Austin, TX, 78725 (US)**
     • **ATANASOV, Aleksandar**
       **Austin, TX, 78725 (US)**
     • **ZHANG, Xuan**
       **Austin, TX, 78725 (US)**
     • **FAN, Xiaotian**
       **Austin, TX, 78725 (US)**
     • **PITT, Julian**
       **Austin, TX, 78725 (US)**
     • **LIU, Yong**
       **Austin, TX, 78725 (US)**

(74) Representative: **Zacco Sweden AB**
     **P.O. Box 5581**
     **Löjtnantsgatan 21**
     **114 85 Stockholm (SE)**

(54)  **DYNAMIC ADJUSTMENT FOR WIRELESS CHARGING COUPLING COEFFICIENTS**

(57)    A wireless charging system can include a first coil and a charging configuration controller. The charging configuration controller can include circuitry configured to cause a parameter adjustment procedure to be performed. The parameter adjustment procedure can include: determining a wireless charging parameter associated with wireless power transfer between the first coil and a second coil, wherein the first coil is wirelessly coupled with the second coil, detecting that the wireless charging parameter is outside of a predetermined range of values; and responsive to the detecting, causing a vehicle to adjust a position of the second coil relative to the first coil such that wireless power transfer between the second coil and the first coil occurs with the second coil at the adjusted position.

FIG. 3

EP 4 707 042 A1

**Description**

CROSS-REFERENCE TO PRIORITY APPLICATION

This application claims priority to U.S. Provisional Patent Application No. 63/692,435, entitled "DYNAMIC ADJUSTMENT FOR WIRELESS CHARGING COUPLING COEFFICIENTS," filed on September 9, 2024, the technical disclosure of which is hereby incorporated by reference in its entirety and for all purposes.

TECHNICAL FIELD

The present disclosure relates to systems and methods for wireless charging. More particularly, embodiments of the present disclosure relate to wireless charging systems and mechanisms for charging a battery pack of a vehicle.

BACKGROUND

Wireless charging devices are usable to wirelessly charge a vehicle, such as an electric vehicle with a battery pack. A wireless charging device may cause power received from an external source, such as the grid, solar cell, and so on, to be wirelessly transmitted (e.g., via inductive coupling) to the electric vehicle. The wireless charging device may be positioned under the electric vehicle to wirelessly charge the electric vehicle.

Self-inductance or coupling coefficients associated with transformer coils used in wireless charging applications can have variations caused by environmental factors such as charging pad positioning (e.g., with respect to the vehicle), and/or nearby ferrous objects. The result of these variations poses technical challenges to stationary power converters in wireless charging systems, where a coil inductance and impedance of a resonant tank are ideally constant.

SUMMARY

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a wireless charging system including: a first coil; and a charging configuration controller including circuitry configured to cause a parameter adjustment procedure to be performed, the parameter adjustment procedure including: determining a wireless charging parameter associated with wireless power transfer between the first coil and a second coil, wherein the first coil is wirelessly coupled with the second coil; detecting that the wireless charging parameter is outside of a predetermined range of values; and responsive to the detecting, causing a vehicle to adjust a position of the second coil relative to the first coil such that wireless power transfer between the second coil and the first coil occurs with the second coil at the adjusted position.

In some aspects, the techniques described herein relate to a wireless charging system, wherein the wireless charging parameter is a coupling coefficient between the first coil and the second coil.

In some aspects, the techniques described herein relate to a wireless charging system, wherein determination of the wireless charging parameter includes perturbing the first coil using one or more electrical signals to determine self-inductance of the second coil.

In some aspects, the techniques described herein relate to a wireless charging system, wherein determination of the wireless charging parameter includes perturbing the second coil using one or more electrical signals to determine self-inductance of the first coil.

In some aspects, the techniques described herein relate to a wireless charging system, wherein the causing the vehicle to adjust the position of the second coil relative to the first coil includes adjusting a height of the second coil relative to the first coil using an air suspension system of the vehicle.

In some aspects, the techniques described herein relate to a wireless charging system, wherein the causing the vehicle to adjust the position of the second coil relative to the first coil includes adjusting an angle of the second coil relative to the first coil using an air suspension system of the vehicle.

In some aspects, the techniques described herein relate to a wireless charging system, wherein the adjusting the angle of the second coil relative to the first coil causes the second coil to be substantially parallel to the first coil.

In some aspects, the techniques described herein relate to a wireless charging system, wherein the adjusting the angle of the second coil relative to the first coil includes controlling one axle of the vehicle.

In some aspects, the techniques described herein relate to a wireless charging system, wherein the causing the vehicle to adjust the position of the second coil relative to the first coil includes causing the vehicle to move laterally relative to a ground pad.

In some aspects, the techniques described herein relate to a wireless charging system, wherein causing the vehicle to adjust the position of the second coil relative to the first coil includes increasing a distance between the second coil and the first coil.

In some aspects, the techniques described herein relate to a wireless charging system, wherein the parameter adjustment procedure further includes: detecting that the wireless charging parameter is within the predetermined range of values; and responsive to the detecting that the wireless charging parameter is within the predetermined range of values, maintaining the position of the second coil relative to the first coil.

In some aspects, the techniques described herein relate to a wireless charging system, wherein the parameter adjustment procedure is iterated until the wireless charging parameter is within the predetermined range of values.

In some aspects, the techniques described herein relate to a wireless charging system, wherein the second coil is included on the vehicle, and wherein the first coil is included on the ground.

In some aspects, the techniques described herein relate to a wireless charging system, wherein at least a portion of the charging configuration controller is included in the vehicle pad.

In some aspects, the techniques described herein relate to a method of wireless charging, the method including: determining a wireless charging parameter associated with wireless power transfer between a second coil of a vehicle and a first coil of a ground pad, wherein the first coil is wirelessly coupled with the second coil; detecting that the wireless charging parameter is outside of a predetermined range of values; and responsive to the detecting, causing the vehicle to adjust a position of the second coil relative to the first coil such that wireless power transfer between the second coil and the first coil occurs with the second coil at the adjusted position.

In some aspects, the techniques described herein relate to a method, wherein the wireless charging parameter is a coupling coefficient between the first coil and the second coil.

In some aspects, the techniques described herein relate to a method, wherein the determining the wireless charging parameter includes perturbing the first coil using one or more electrical signals to determine self-inductance of the second coil

In some aspects, the techniques described herein relate to a method, wherein the determining the wireless charging parameter includes perturbing the second coil using one or more electrical signals to determine self-inductance of the first coils.

In some aspects, the techniques described herein relate to a method, wherein the causing the vehicle to adjust the position of the second coil relative to the first coil includes adjusting a height of the second coil relative to the first coil using an air suspension system of the vehicle.

In some aspects, the techniques described herein relate to a method, wherein the causing the vehicle to adjust the position of the second coil relative to the first coil includes adjusting an angle of the first coil relative to the second coil using an air suspension system of the vehicle.

In some aspects, the techniques described herein relate to a method, wherein the adjusting the angle of the second coil relative to the first coil causes the second coil to be substantially parallel to the second coil.

In some aspects, the techniques described herein relate to a method, wherein the adjusting the angle of the second coil relative to the first coil includes controlling one axle of the vehicle.

In some aspects, the techniques described herein relate to a method, wherein the causing the vehicle to adjust the position of the second coil relative to the first coil includes causing the vehicle to move laterally relative to the ground pad.

In some aspects, the techniques described herein relate to a method, wherein causing the vehicle to adjust the position of the second coil relative to the first coil includes raising a height of the second coil relative to the first coil.

In some aspects, the techniques described herein relate to a method, further including: detecting that the wireless charging parameter is within the predetermined range of values; and responsive to the detecting that the wireless charging parameter is within the predetermined range of value, maintaining the position of the second coil relative to the first coil.

In some aspects, the techniques described herein relate to a method, further including repeating (i) the determining the wireless charging parameter, (ii) the detecting that the wireless charging parameter is outside of the predetermined range of values, and (iii) the causing the vehicle to adjust the position of the second coil relative to the first coil until detecting that the wireless charging parameter is within the predetermined range of values.

BRIEF DESCRIPTION OF THE DRAWINGS

Throughout the drawings, reference numbers are re-used to indicate correspondence between referenced elements. The drawings are provided to illustrate examples of the subject matter described herein and not to limit the scope thereof.

Embodiments of the present disclosure are described with reference to the accompanying drawings, in which like reference characters reference like elements, and wherein:

FIG. 1A illustrates an example wireless charging environment in which embodiments of the present disclosure can be implemented.

FIG. 1B is a block diagram illustrating the example wireless charging environment of FIG. 1A in accordance with embodiments of the present disclosure.

FIG. 2 is a block diagram illustrating at least a portion of a wireless charging system in accordance with embodiments of the present disclosure.

FIG. 3 illustrates an example block diagram of a wireless charging system in accordance with embodiments of the present disclosure.

FIG. 4A illustrates an example electric vehicle in accordance with embodiments of the present disclosure.

FIG. 4B illustrates an example of a wireless charger and a vehicle in accordance with embodiments of the present disclosure.

FIG. 4C illustrates a top view of an example of a wireless charger and a vehicle in accordance with embodiments of the present disclosure.

FIG. 5 illustrates an example procedure for determining and adjusting a coupling coefficient in accordance with embodiments of the present disclosure.

FIGS. 6A and 6B illustrate various positions associated with the example electric vehicle of FIG. 4A for adjusting a wireless charging parameter associated with the example electric vehicle.

## DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems and methods that adapt to variations associated with environments and/or components utilized for wireless charging using, for example, air suspension systems of electric vehicles. More specifically, some embodiments of the present disclosure disclose using air suspension systems of electric vehicles to adjust parameters (e.g., a magnetic coupling coefficient or simply a "coupling coefficient") associated with resonant converters or transformers before wireless charging sessions commence and/or during wireless charging sessions. Advantageously, the adjustment may increase the coupling coefficients for wirelessly transmitting power efficiently and decrease variations of the coupling coefficient. This can result in less complexity and cost of electronic designs across various environments or system setups.

In some embodiments, an adjustment flow (e.g., a parameter adjustment procedure) includes initiating a handshake sequence to determine the coupling coefficient and compare the coupling coefficient to a predetermined range of values. Responsive to determining that the coupling coefficient is sub-optimal based on the comparison, an air suspension system of an electric vehicle adjusts a height and/or an angle of the electric vehicle to increase the coupling coefficient and/or reduce variations of the coupling coefficient associated with the electric vehicle. In some embodiments, when the coupling coefficient is maximized or within a predetermined range of values for a given parking or alignment condition, a wireless charging session commences.

Typically, a wireless charging device can wirelessly charge a vehicle, such as an electric vehicle with a battery pack. The wireless charging device may cause power from an external source, such as the grid, solar cell, and so on, to be wirelessly transmitted (e.g., via induction) to the electric vehicle. The wireless charging device may also cause power from the electric vehicle to be wirelessly transmitted (e.g., via induction) to the grid. In some embodiments, the wireless charging device may be positioned under a vehicle. For example, the vehicle may drive over the wireless charging device.

Wireless power transfer using the wireless charging device depends on magnetic flux coupling between a transmitter (e.g., a ground pad) coil and a receiver (e.g., a vehicle pad) coil for efficient and safe power transmission. To normalize the magnetic flux coupling across various platforms associated with differing nominal inductances and numbers of primary and secondary coil turns, the coupling coefficient (denoted as k) can be normalized. The coupling coefficient may be represented by equation (1), where M is a measured mutual inductance, L1 is a nominal self-inductance of the transmitter coil, and L2 is a nominal self-inductance of the receiver coil.

$$k = \mathrm{M} / \mathrm{sqrt}(\mathrm{L1} * \mathrm{L2}) \qquad\qquad (\text{Equation 1})$$

Magnetic coupling, self-inductance, mutual inductance, and/or coupling coefficients associated with transformer coils used in wireless charging applications can have relatively large variations caused by environmental factors, such as charging pad positioning (e.g., gaps and misalignment between vehicle pads and ground pads), vehicle chassis geometry, ground charging pads material composition, types of ground floors upon which ground charging pads are installed (e.g., tensioned concrete, or other types of ground floors), and/or nearby ferrous objects. The result of this variation poses technical challenges, which were not encountered in certain traditional stationary direct current to direct current (DC/DC) resonant converters in wireless charging systems, where the transformer inductance is constant and, therefore, the impedance of the resonant tank is constant. Due to the relatively large variation of the coupling coefficient and/or scenarios with sub-optimal coupling coefficients, it can be advantageous for a wireless charging system to increase the coupling coefficient and/or reduce variations of the coupling coefficient to achieve safe operation of the wireless charging system and the desired power transfer efficiency and output.

To address at least a portion of the above identified technical problems, some aspects of the disclosed technology utilize a charging configuration controller to perform, direct, or otherwise enable, a parameter adjustment procedure for determining a coupling coefficient between a ground pad coil and a vehicle pad coil, and adjusting the coupling coefficient based on the determination. This procedure can allow optimization of the coupling coefficient for one or more of efficiency, temperature, power level, or the like. Executing the parameter adjustment procedure, the charging configuration controller may perform the following operations. The charging configuration controller may determine the coupling coefficient in a hand-shake sequence that perturbs the ground pad coil and/or the vehicle pad coil using electrical signal sources of various signal waveforms. More specifically, in some embodiments, the coupling coefficient may be determined by using the coupling coefficient estimation sequence disclosed in the co-owned International Application No. PCT/US2024/017446 or using any other suitable coupling coefficient estimation sequence. The disclosure of International Application No. PCT/US2024/017446 is hereby incorporated by reference in its entirety and for all purposes.

The charging configuration controller may further compare the coupling coefficient to a predetermined range of values. The charging configuration controller can determine whether the coupling coefficient is within or outside of the predetermined range of values. The predetermined range of values may be obtained based on coupling coefficients determined previously, technical specifications, or experimental data.

Based on the comparison, the charging configuration controller may determine that the coupling coefficient is sub-optimal. For example, the charging configuration controller may determine that the coupling coefficient can be further increased because the coupling coefficient is below the predetermined range of values. Responsive to determining that the coupling coefficient is sub-optimal, the charging configuration controller may cause an air suspension system of an electric vehicle to adjust a height and/or an angle of the vehicle pad coil that is attached to the electric vehicle. Advantageously, the coupling coefficient may be increased after the air suspension system adjusts the height and/or the angle of the vehicle pad coil. The charging configuration controller can alternatively or additionally cause the vehicle to move forward or backward to improve alignment of a vehicle pad and a ground pad to thereby increase the coupling coefficient.

In some embodiments, the charging configuration controller may cause the air suspension system of the electric vehicle to lower the height of the vehicle pad coil such that the vehicle pad coil is closer to the ground pad coil. For example, the charging configuration controller may cause the air suspension system to lower the height of the vehicle pad coil to a minimum height to the ground pad. The charging configuration controller may generate a control signal to an electronic control unit (ECU) of the air suspension system to cause a vehicle body, as well as the vehicle pad coil, to be lowered closer to the ground pad coil. By reducing a distance between the vehicle pad coil and the ground pad coil, the coupling coefficient may be increased. In certain applications, the air suspension system can bring the vehicle pad coil and the ground pad coil as close as possible to each other. The air suspension system can bring the vehicle pad coil closer to the ground pad coil prior to wireless charging and/or during wireless charging. Alternatively, the charging configuration controller may cause the height of the ground pad coil to increase without causing the height of the vehicle pad coil to be lowered.

Under radial misalignment, a smaller air gap between a ground pad coil and a vehicle pad coil can decrease the coupling coefficient. The vehicle pad coil can be oriented at an angle in a range from 5° to 10° relative to a ground surface, and this angle can contribute to radial misalignment. In some embodiments, the charging configuration controller may cause the air suspension system to raise the height of the vehicle pad coil to increase the coupling coefficient. In these embodiments, based at least on the coupling coefficient determined by executing the parameter adjustment procedure, the charging configuration controller may determine that the ground pad coil and the vehicle pad coil misalign (e.g., the two pads are not close to vertically perpendicular to each other) with each other. For example, when the charging configuration controller determines that the ground pad coil and the vehicle pad misalign with each other horizontally over a particular distance (e.g., 5 centimeters, 10 centimeters, 15 centimeters, or the like), the charging configuration controller may cause the air suspension system to raise the height of the vehicle pad coil such that the coupling coefficient may be increased.

In some embodiments, the charging configuration controller may cause the air suspension system of the electric vehicle to adjust an angle of the vehicle pad coil with respect to the ground pad coil. For example, the charging configuration controller may cause the air suspension system to adjust height(s) associated with at least one of the four corners of the electric vehicle to adjust the angle of the vehicle pad coil. As another example, the charging configuration controller may cause the air suspension system to lower or increase a height of a rear axle of the electric vehicle to adjust the angle of the vehicle pad coil when the vehicle pad coil is deployed near the rear axle. As yet another example, the charging configuration controller may cause the air suspension system to lower or increase a height of a front axle of the electric vehicle to adjust the angle of the vehicle pad coil when the vehicle pad coil is deployed near the front axle. In some embodiments, the charging configuration controller may cause the air suspension system of the electric vehicle to adjust the angle of the vehicle pad coil such that the vehicle pad coil is substantially parallel to the ground pad coil so as to increase the coupling coefficient.

In some embodiments, a disclosed wireless charging system may include a converter and the charging configuration controller. The converter may include a ground pad coil and a vehicle pad coil. The ground pad coil may be deployed in a ground pad of the wireless charging system. The vehicle pad coil may be deployed in a vehicle pad that is attached or otherwise integrated into a vehicle to be charged. The charging configuration controller may execute the parameter adjustment procedure to determine and adjust the coupling coefficient. The parameter adjustment procedure may include: estimating or determining the coupling coefficient; comparing the coupling coefficient to a predetermined range of values; responsive to determining that the coupling coefficient is sub-optimal based on the comparison, causing an air suspension system of the electric vehicle to adjust a height and/or an angle of the vehicle pad coil. The charging configuration controller may repeat or iterate the parameter adjustment procedure until the coupling coefficient is determined to be optimal (e.g., maximized under a given environment setting) or within a desired range.

Although the various aspects will be described in accordance with illustrative embodiments and combination of features, one skilled in the relevant art will appreciate that the examples and combination of features are illustrative in nature and should not necessarily be construed as limiting. More specifically, aspects of the present application may be applicable to various types of wireless charging systems and devices under different contexts. Still further, although specific architectures of block diagrams or flow for adjusting coupling coefficients associated with converters will be described, such illustrative block diagrams or state machine or architecture should not necessarily be construed as limiting. Accordingly, one skilled in the relevant field of technology will appreciate that the aspects of the present application are not necessarily limited to application to any particular types of converters or wireless charging infrastructures.

**Overview of Wireless Charging**

Generally described, inductive charging, commonly referred to as wireless charging, is a type of wireless power transfer. Inductive charging uses electromagnetic induction to generate, or otherwise provide, electricity to devices without requiring physical electrical connectivity. Specifically, various devices can be placed near a charging station or inductive pad without needing to be precisely aligned or make electrical contact, a physical dock, electric plug and the like. Such devices include, but are not limited to, vehicles, manufacturing equipment, consumer electronics, medical devices, and the like.

In accordance with aspects of the present application, inductive charging systems are configured to transfer energy through inductive coupling between components. An illustrative charging system includes a transferring component, which may be configured as a charging station or charging pad. An alternating current (e.g., an input current) from a power source passes through an induction coil in the charging station or pad. Based on the input current, the moving electric charge through the induction coil (e.g., a sender coil) creates (or elicits) a magnetic field. Illustratively, the strength of a magnetic field may fluctuate, at least in part, on changes or fluctuations in the input electric current's amplitude. The changing magnetic field creates an alternating electric current in an induction coil on a receiving device (e.g., a receiver coil). The induced alternating current in the receiving device can then pass through a rectifier, converting the induced alternating current to direct current. Finally, the receiving vehicle can include additional charging components and/or systems that utilize the converted direct current to charge battery systems, provide operating power, or a combination thereof.

Greater distances between sender and receiver coils can be achieved when illustrative inductive charging systems use resonant inductive coupling components/techniques. More specifically, in some embodiments, a capacitor can be connected to each induction coil to create two LC, LLC, CLLC, or other types of suitable circuits with a specific resonance frequency. The frequency of the alternating current is matched with the resonance frequency. Additionally, the matched frequency can be further chosen depending on a distance between the sending device and the receiver device with consideration for peak efficiency. Still further, use of other materials for the receiver coil such as silver-plated copper or sometimes aluminum to minimize weight and decrease resistance can be utilized for purposes of energy transfer efficiencies.

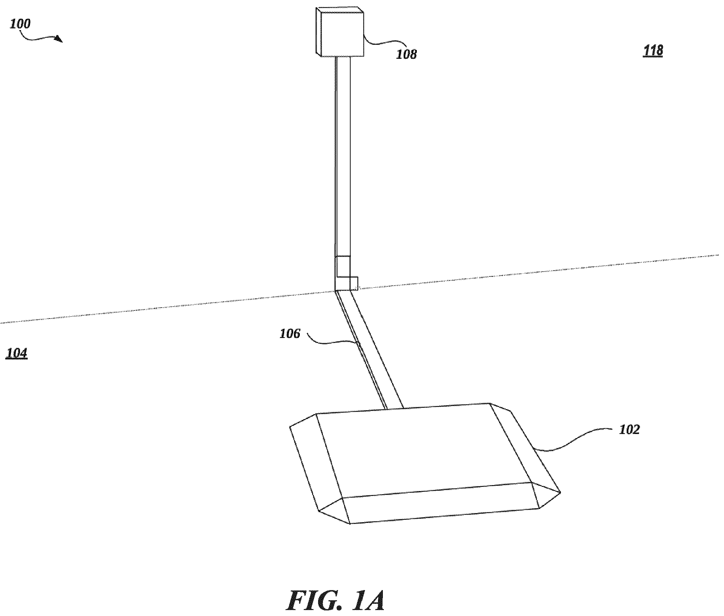

FIG. 1A is a diagram illustrative of an environment 100 for implementing an induction-based wireless charging system in accordance with various aspects of the present application. The environment 100 illustratively can correspond to commercial implementations, such as parking lots, parking stalls, charging booths, and the like. The environment 100 can correspond to private or other non-commercial implementations, such as private residences, etc. By way of an illustrative example, an implementation of an induction-based wireless charging system in a non-commercial implementation can include a sender component 102 that is configured to generate variable magnetic fields in accordance with an induction charging methodology. As also illustrated in FIG. 1A, the sender component 102, which can also be referred to as a transmitting component, can correspond to a stand-alone component that may be operable to be mounted or placed on a floor 104 or other planar surface. In other embodiments, the sender component 102 can be integrated or combined with other devices or components.

The sender component 102 may be connected to one or more power sources, such as an input from a utility company, real-time power sources (e.g., solar cells or wind energy sources), stored energy cells, or a combination thereof. The power sources are configured to provide the input alternating current as described herein. The sender component 102 may be connected via direct electric connection 106 to the power source, such as via a junction box 108 located on a wall surface 118.

As illustrated in FIG. 1A, in one embodiment, the sender component 102 corresponds to a form factor that allows for the location on the floor 104 for wirelessly charging with a vehicle having a receiver coil. The sender component 102 may have a form factor such that the vehicle may be located directly above a top surface of the sender component. Illustratively, the dimensions of the sender component 102 (e.g., the height and width of the sender component 102) may be configured so that a distance between the top surface of the sender component 102 and a bottom surface of the vehicle meets specific criteria, such as minimum distance between the sender coil and receiver coil, maximum distance between the sender coil and the receiver coil, or the like. In some embodiments, the vehicle or sender component 102 (or combination) may be configured with additional components for dynamically adjusting such distance or otherwise changing the relative orientation between the sender component 102 and the vehicle. In some embodiments, the sender component 102 can be configured to charge a battery pack of a vehicle, wherein the battery pack can have a nominal voltage of over 200 Volts (e.g., a nominal voltage of about 350 Volts or 355 Volts) and a maximum voltage of 400 Volts. In some embodiments, the sender component 102 can be configured to supply 800 Volts of direct current power. In some embodiments, the sender component 102 can supply a voltage in a range from about 200 Volts to 800 Volts.

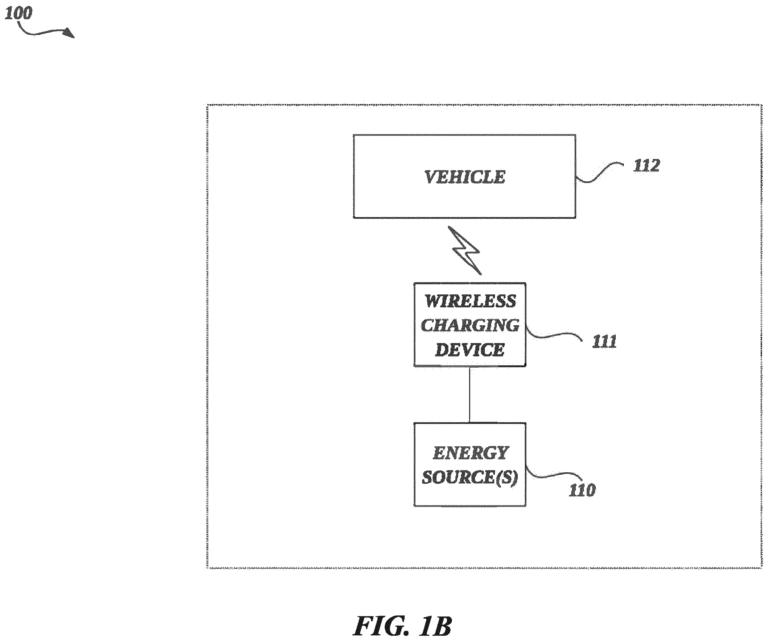

FIG. 1B illustrates a block diagram of the environment 100 including a wireless charging device 111 (e.g., the sender component 102) in wireless communication with a vehicle 112, such as via induction-based magnetic fields. The wireless charging device 111 is further connected to one or more energy sources 110. Although the wireless charging device 111 is illustrated with a direct connection to the energy sources 110, at least some portion of the input alternating current could also be provided via a wireless transmission method. Additionally, in embodiments with multiple power sources, the environment may also include various switching components to cause the selection of energy from individual energy sources 110 or a combination of energy sources 110.

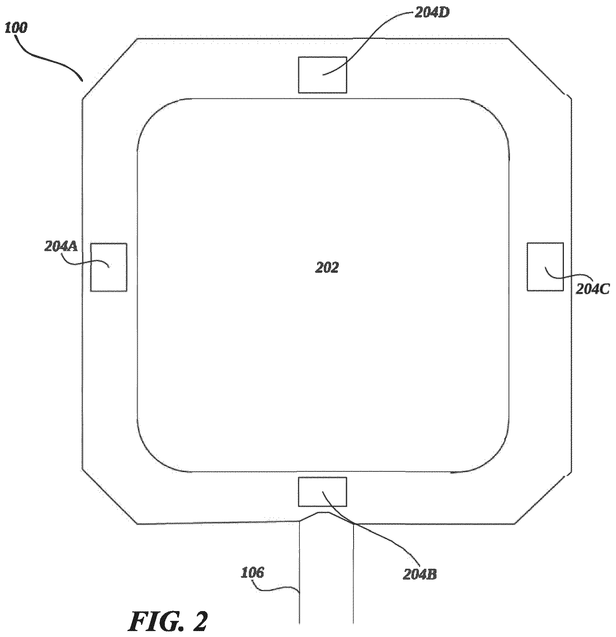

FIG. 2 illustrates a block diagram of a sender component 102 that may function as a wireless charging device 111 (shown in FIG. 1B). The sender component 102 can include at least a sender coil component 202 for causing the generation of magnetic fields from an input current provided from an energy source 110. As illustrated in FIG. 2, the input current can be provided by a direct electric connection 106.

In some embodiments, the sender component 102 can also include various sensor components 204 related to the charging process. By way of illustration, the sensor components 204A, 204B, 204C, and 204 can be configured for various functions, such as detection of vehicle 112, detection of objects, measurement of distances to the vehicle, environmental sensors (e.g., temperature sensors, moisture sensors), pressure sensors, and the like. In an embodiment, the sensor components 204 can include radar sensors. The sensor components 204 can include logic and processing components related to the charging process including operational measurements, operational control, safety measurements, communication components and the like.


**Example Wireless Charging System**

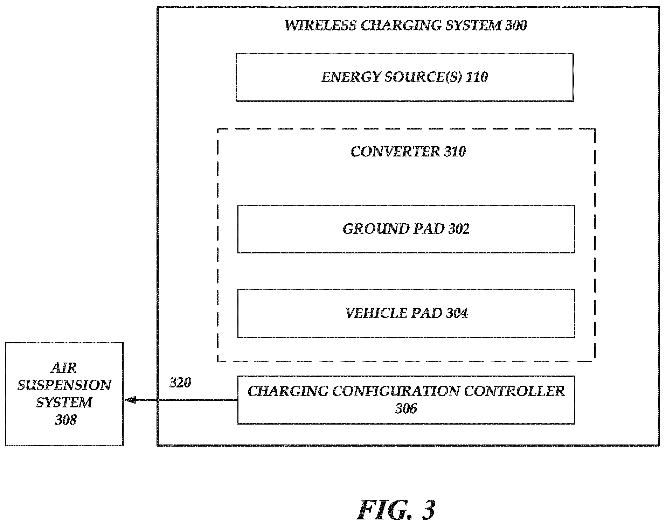

FIG. 3 illustrates an example wireless charging system 300 that is operable to determine and adjust parameters associated with a resonant converter and/or a transformer. The wireless charging system 300 can adjust a coupling coefficient between a vehicle pad and a ground pad. This can involve responding to environmental impacts on the coupling coefficient. The environments described in FIGS. 1A, 1B, and 2 can include a wireless charging system in accordance with any suitable principles and advantages of the wireless charging system 300 and may utilize the same or similar architecture as described in FIG. 3.

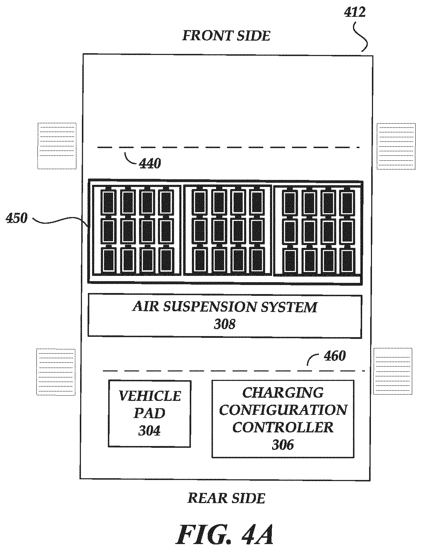

As shown in FIG. 3, the wireless charging system 300 includes energy source(s) 110, a converter 310 (e.g., a DC/DC converter) that includes a ground pad 302 and a vehicle pad 304, and a charging configuration controller 306. The ground pad 302 may be a part of the sender component 102. The vehicle pad 304 may be attached to or a part of the vehicle 112 of FIG. 1B that can be the same or similar to a vehicle 412 to be illustrated in FIGS. 4A-4C. The wireless charging system 300 is represented in a simplified, logical form and one or more additional components may be implemented for wireless charging functionality. Further, some of the components separately illustrated therein may be physically integrated together. For example, some of the components (e.g., a portion of the converter 310 such as the ground pad 302 that includes a ground pad coil) may be deployed outside a vehicle (e.g., on a ground), and some of the components (e.g., another portion of the converter 310 such as the vehicle pad 304 that includes a vehicle pad coil) may be deployed within a vehicle. As such, in some embodiments, the ground pad 302 may be integrated as a part of the sender component 102 of FIG. 1A and the vehicle pad 304 may be integrated as a part of the vehicle 112 of FIG. 1B. In some instances, the charging configuration controller 306 can be implemented in the ground pad 302 or a wall box. For example, the charging configuration controller 306 can be implemented in the sender component 102 of FIG. 1A. In some instances, the charging configuration controller 306 can be implemented in the vehicle pad 304 or another part of the vehicle. For example, the charging configuration controller 306 can be implemented as a part of the vehicle 112 of FIG. 1B, or as a part of the vehicle 412 (e.g., inside the vehicle pad 304 or outside the vehicle pad 304) of FIG. 4A. In some instances, a portion of the charging configuration controller 306 can be implemented in the ground pad 302, and another portion of the charging configuration controller 306 can be implemented in the vehicle pad 304.

In some embodiments, the wireless charging system 300 of FIG. 3 is used to charge a battery pack (that may be installed on the vehicle 112 of FIG. 1B) through the operation of the converter 310 that converts electric power from the energy source(s) 110 to a voltage level suitable for charging the battery. In some embodiments, the ground pad 302 is wired connected and provided with electric power from the energy source(s) 110. The charging configuration controller 306 can cause the wireless charging system 300 to perform operations related to measurements and/or calculations for determining one or more parameters (e.g., the coupling coefficient) of the converter 310. The charging configuration controller 306 can be implemented by any suitable circuitry, such as dedicated circuitry, circuitry configured to execute specific instructions, or any suitable combination thereof. One or more processors executing specific instructions can implement some or all of the charging configuration controller 306. The specific instructions can be stored by non-transitory computer-readable storage of the charging configuration controller 306.

In some embodiments, the charging configuration controller 306 may execute a parameter adjustment procedure to determine a coupling coefficient of a ground pad coil in the ground pad 302 and a vehicle pad coil in the vehicle pad 304. More specifically, by executing the parameter adjustment procedure, the charging configuration controller 306 may determine the coupling coefficient in a hand-shake sequence that perturbs the ground pad coil in the ground pad 302 and/or the vehicle pad coil in the vehicle pad 304 using electrical signal sources of various signal waveforms. As noted above, the charging configuration controller 306 may determine the coupling coefficient using the coupling coefficient estimation sequence disclosed in the co-owned International Application No. PCT/US2024/017446 or using any other suitable estimation sequence. Although embodiments may be discussed with reference to a coupling coefficient, any suitable principles and advantages related to determining how to adjust the vehicle pad can be implemented using any other suitable wireless charging parameter. For instance, instead of calculating a coupling coefficient and using the coupling coefficient to determine whether to adjust the position of the vehicle pad, one or more other parameters indicative of the coupling coefficient or used to calculate the coupling coefficient can be used.

The charging configuration controller 306 may further compare the coupling coefficient to a predetermined range of values. As noted above, the predetermined range of values may be obtained based on coupling coefficients determined previously or experimental data. In some embodiments, the predetermined range of values for the coupling coefficient may be between 0.1 to 0.3, or any other range of values. Based on the comparison, the charging configuration controller 306 may determine that the coupling coefficient is sub-optimal. For example, the charging configuration controller 306 may determine that the coupling coefficient can be further increased because the coupling coefficient is below or near a lower end of the predetermined range of values. Responsive to determining that the coupling coefficient is sub-optimal, the charging configuration controller 306 may generate a control signal 320 to cause an air suspension system 308 of an electric vehicle (e.g., the vehicle 112 and the vehicle 412) to adjust a height and/or an angle of the vehicle pad 304 that is attached to the electric vehicle.

**Example Electric Vehicle**

FIG. 4A illustrates an example electric vehicle 412 within which the charging configuration controller 306 can be implemented in accordance with some embodiments of the present disclosure. As shown in FIG. 4A, the electric vehicle 412 includes the charging configuration controller 306, the air suspension system 308, the vehicle pad 304, a battery pack 450, a front axle 440, and a rear axle 460. Although FIG. 4A illustrates that the vehicle pad 304 is deployed or attached to the electric vehicle 412 close to the rear axle 460, it should be noted that the vehicle pad 304 may be installed around other parts (e.g., close to the front axle 440, between the front axle 440 and the rear axle 460, or the like) of the electric vehicle 412.

FIG. 4A is described with reference to an electric vehicle 412 that includes a charging configuration controller 306. In some other applications, the charging configuration controller 306 can be implemented external to a vehicle and the air suspension system 308 (and/or another system of the vehicle) can receive one or more commands from the external charging configuration controller 306 to perform any of the functions discussed with reference to FIG. 4A.

In some embodiments, responsive to determining that the coupling coefficient between the vehicle pad 304 and the ground pad 302 is sub-optimal or outside of a desired range, the charging configuration controller 306 may cause the air suspension system 308 of the electric vehicle 412 to lower the height of the vehicle pad 304 such that a vehicle pad coil of the vehicle pad 304 is closer to a ground pad coil of the ground pad 302. For example, the charging configuration controller 306 may cause the air suspension system 308 to lower the height of the vehicle pad 304 to a minimum distance to the ground pad 302. The charging configuration controller 306 may generate a control signal to an electronic control unit (ECU) of the air suspension system 308 to cause a vehicle body of the electric vehicle 412 as well as the vehicle pad 304 to be lowered closer to the ground pad 302. By reducing a distance between the vehicle pad 304 and the ground pad 302, the coupling coefficient may be increased. In certain applications, the air suspension system 308 can bring the vehicle pad 304 and the ground pad 302 as close as possible to each other under a given environmental setup or a parking condition. The air suspension system 308 can bring the vehicle pad 304 closer to the ground pad 302 prior to wireless charging. Alternatively, the charging configuration controller 306 may cause a height of the ground pad 302 to increase without causing the height of the vehicle pad 304 to be lowered.

In some embodiments, the charging configuration controller 306 may cause the air suspension system 308 to raise the height of the vehicle pad 304 to increase the coupling coefficient. In these embodiments, based at least on the coupling coefficient determined by executing the parameter adjustment procedure, the charging configuration controller 306 may determine that the ground pad 302 and the vehicle pad 304 misalign (e.g., the two pads are not close to vertically perpendicular to each other) with each other. For example, when the charging configuration controller 306 determines that the ground pad 302 and the vehicle pad 304 misalign with each other horizontally over a particular distance (e.g., 5 centimeters, 10 centimeters, 15 centimeters, or the like), the charging configuration controller 306 may cause the air suspension system 308 to raise the height of the vehicle pad 304 such that the coupling coefficient may be increased.

Additionally and/or alternatively, the charging configuration controller 306 may cause the air suspension system 308 to adjust an angle of the vehicle pad 304 with respect to the ground pad 302. For example, the charging configuration controller 306 may cause the air suspension system 308 to adjust height(s) associated with at least one of the four corners of the electric vehicle 412 to adjust the angle of the vehicle pad 304. As another example, the charging configuration controller 306 may cause the air suspension system 308 to lower or increase a height of the rear axle 460 of the electric vehicle 412 to adjust the angle of the vehicle pad 304 when the vehicle pad 304 is deployed near the rear axle 460. As yet another example, the charging configuration controller 306 may cause the air suspension system 308 to lower or increase a height of the front axle 440 of the electric vehicle 412 to adjust the angle of the vehicle pad 304 when the vehicle pad 304 is deployed near the front axle 440.

In some embodiments, the charging configuration controller 306 may cause the air suspension system 308 of the electric vehicle to adjust the angle of the vehicle pad 304 such that the vehicle pad 304 is substantially parallel to the ground pad 302 so as to increase the coupling coefficient. For example, the charging configuration controller 306 may cause the air suspension system 308 to lower or raise a height of the rear axle 460 to adjust the angle of the vehicle pad 304 such that the vehicle pad 304 is substantially parallel to the ground pad 302 when the vehicle pad 304 is deployed near or around the rear axle 460.

The electric vehicle 412 can have autonomous and/or semi-autonomous driving features in certain applications. In such applications, the charging configuration controller 306 can cause the electric vehicle 412 to move (e.g., forward or backward) to improve alignment between the vehicle pad 304 and the ground pad 302. Such lateral movement of the vehicle pad 304 can be followed by the charging configuration controller 306, causing the air suspension system 308 to adjust the height and/or angle of the vehicle pad 304.

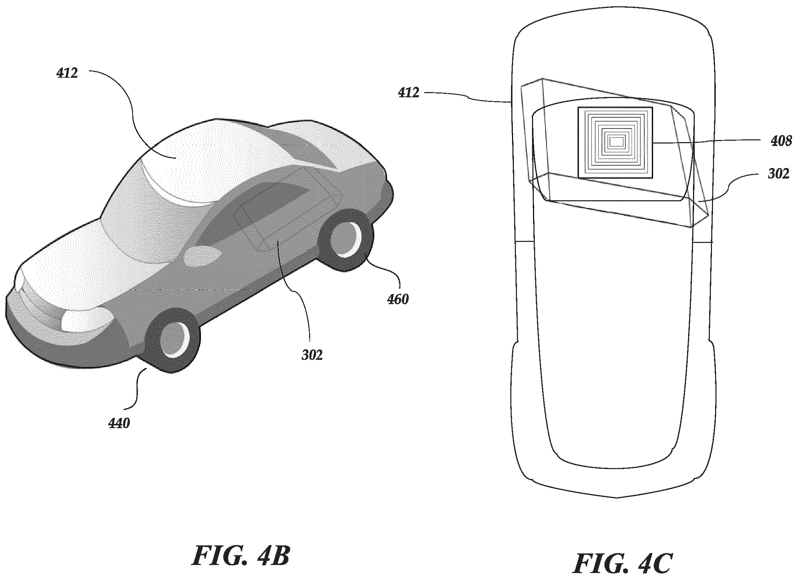

FIGS. 4B and 4C illustrate an example alignment between the ground pad 302 (e.g., a wireless charger) and the electric vehicle 412. FIG. 4C illustrates a top view of the ground pad 302 and a representation of the electric vehicle 412 illustrated in FIG. 4B. The ground pad 302 and the electric vehicle 412 can be coupled to charge the battery pack 450 of the electric vehicle 412. For example, a ground pad coil of the ground pad 302 and a vehicle pad coil 408 of the vehicle pad 304 can be coupled with each other for wireless power transmission. As illustrated in FIGS. 4B and 4C, the electric vehicle 412 is parked such that the ground pad 302 is around a rear end of the electric vehicle 412 to align with the vehicle pad coil 408. Although FIGS. 4B and 4C illustrate that the vehicle pad coil 408 is deployed near the rear axle 460, it should be noted that the vehicle pad coil 408 may be deployed around other parts (e.g., near the front axle 440 as illustrated in FIG. 4A, or around a bottom center of the vehicle 412) of the electric vehicle 412. As such, other alignments between the electric vehicle 412 and the ground pad 302 may be applicable to align the vehicle pad coil 408 and the ground pad 302 for wireless power transmission.

In accordance with aspects of the present disclosure, the ground pad 302 can be configured to transfer energy through inductive coupling with the vehicle pad coil 408, such that the vehicle pad coil 408 can be configured to receive energy from the ground pad 302 via inductive coupling. Illustratively, the ground pad 302 can include an energy transferring component, such as a transmitter coil. Such a transmitter coil can be an induction coil. The ground pad 302 can generally be referred to as a charging station, a charging pad, or a ground pad. Such a transmitter coil can be configured to induce electromagnetic fields from power received from an energy source. The power can be provided as an alternating current provided from a power source, such as a wall outlet, an external battery, and the like. This alternating current (AC) can pass through the transmitter coil. For example, such AC current may flow into the transmitter coil, resulting in the electric charges moving through the transmitter coil. These movements in the transmitter coil can induce (or elicit) electromagnetic fields.

Illustratively, the vehicle pad coil 408 included in the electric vehicle 412 may receive the electromagnetic fields by locating it within a certain distance from the ground pad 302 (e.g., the vehicle pad coil 408 is located above the ground pad 302 in a threshold distance). The threshold distance can be determined based on the strength of the generated electromagnetic fields and also a criterion that defines the transfer energy ratio between the ground pad 302 and the vehicle pad coil 408. When the vehicle pad coil 408 receives the electromagnetic fields generated from the transmitter coil of the ground pad 302, the energy of electromagnetic fields may fluctuate, at least in part, on changes or fluctuations in the AC amplitude, frequency, or phase shift. This changing of the electromagnetic field can create an alternating electric current in the vehicle pad coil 408 on the vehicle 412. The induced alternating current in the vehicle pad coil 408 can then be converted into direct current to charge the battery pack 450 of the electric vehicle 412. For example, the induced alternating current can be transmitted through a rectifier, and the rectifier may convert the induced alternating current to direct current. Then, the electric vehicle 412 can be configured to use the direct current to charge its battery or provide operating power, or a combination thereof.

As noted above, by adjusting a height and/or an angle of the vehicle pad coil 408 through the coordination between the charging configuration controller 306 and the air suspension system 308, the coupling coefficient between the vehicle pad coil 408 and a ground pad coil of the ground pad 302 can be advantageously increased, thereby accomplishing more energy efficient wireless power transmission. Additionally, variations of the coupling coefficient between the vehicle pad coil 408 and a ground pad coil of the ground pad 302 under various environment setups may be reduced, thereby accomplishing less complexity and cost of electronic designs across various environments or system setup.

**Example Parameter Adjustment Procedure**

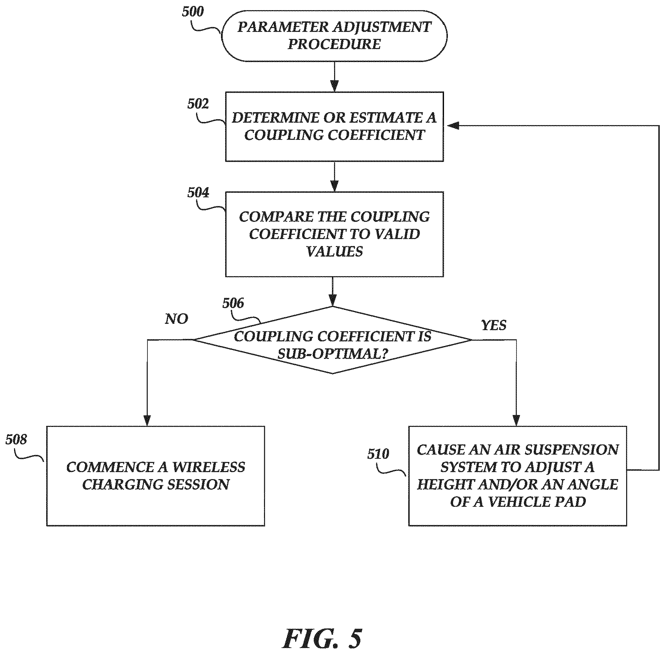

With reference to FIG. 5, an illustrative parameter adjustment procedure 500 (or simply referred to herein as a procedure) for determining a coupling coefficient between a ground pad coil and a vehicle pad coil, and adjusting the coupling coefficient based on the determination will be described. The procedure 500 can increase the coupling coefficient and by dynamically controlling the height of the vehicle (and thus vehicle pad) and/or the angle of the vehicle pad through real-time coupling coefficient estimation measurement and feedback. The procedure 500 can be performed before wireless charging commences. The procedure 500 can be performed during a wireless charging session. The procedure 500 may be implemented, for example, by the charging configuration controller 306. The procedure 500 can be performed after a vehicle parks over a ground pad.

The procedure 500 begins at block 502. At block 502, the charging configuration controller 306 determines or estimates a coupling coefficient. More specifically, the charging configuration controller 306 may determine a coupling coefficient between a ground pad coil in the ground pad 302 and the vehicle pad coil 408 in the vehicle pad 304. The coupling coefficient can be estimated or determined in any suitable way. For instance, the charging configuration controller 306 may determine the coupling coefficient using a hand-shake sequence that perturbs the ground pad coil in the ground pad 302 and/or the vehicle pad coil 408 in the vehicle pad 304 with electrical signal sources of various signal waveforms.

At block 504, the charging configuration controller 306 can detect whether the coupling coefficient is within a desired range. This can involve comparing the coupling coefficient to valid values or to a predetermined range of values. The predetermined range of values may be obtained based on coupling coefficients determined previously, included in technical specifications, or experimental data.

At decision block 506, the charging configuration controller 306 determines if the coupling coefficient is sub-optimal. For example, the charging configuration controller 306 may determine that the coupling coefficient is sub-optimal and can be further increased because the coupling coefficient is below the lower end of the predetermined range of values. As another example, the charging configuration controller 306 may determine that the coupling coefficient is within the predetermined range and is suitable for wireless charging.

The procedure 500 then varies according to whether the coupling coefficient is sub-optimal (e.g., the coupling coefficient is outside of the desired range). In the instance that the coupling coefficient is not sub-optimal (e.g., the coupling coefficient is within the desired range), the decision block 506 yields "NO" and the procedure 500 proceeds to block 508.

At block 508, the charging configuration controller 306 or the wireless charging system 300 may maintain the positions of the ground pad 302 and the vehicle pad 304 for wireless charging.

In the instance that the coupling coefficient is sub-optimal, the decision block 506 yields "YES" and the procedure 500 proceeds to block 510.

At block 510, the charging configuration controller 306 causes the air suspension system 308 to adjust a position (e.g., height and/or an angle) of the vehicle pad 304. For example, the charging configuration controller 306 may cause the air suspension system 308 of the electric vehicle 412 to lower the height of the vehicle pad 304 such that the vehicle pad coil 408 of the vehicle pad 304 is closer to a ground pad coil of the ground pad 302. The charging configuration controller 306 may generate a control signal to an electronic control unit (ECU) of the air suspension system 308 to cause a vehicle body of the electric vehicle 412 as well as the vehicle pad 304 to be lowered closer to the ground pad 302. By reducing a distance between the vehicle pad 304 and the ground pad 302, the coupling coefficient may be increased. As another example, the charging configuration controller 306 may cause the air suspension system 308 to raise the height of the vehicle pad 304 to increase the coupling coefficient. As yet another example, the charging configuration controller 306 may cause the air suspension system 308 to adjust an angle of the vehicle pad 304 with respect to the ground pad 302.

After causing the air suspension system 308 to adjust a height and/or an angle of the vehicle pad 304, the procedure 500 may return to block 502, where the charging configuration controller 306 determines the coupling coefficient, compares the coupling coefficient to valid values, and determines if the coupling coefficient is sub-optimal as described in more detail above with respect to block 502, 504, and 506. Accordingly, the procedure 500 can iteratively increase the coupling coefficient.

Although the procedure 500 is described with reference to determining coupling coefficient and using the coupling coefficient to adjust a position of the vehicle pad to improve coupling coefficient, any other suitable wireless charging parameter can alternatively or additionally be determined and used to adjust position of a vehicle pad to improve coupling coefficient.

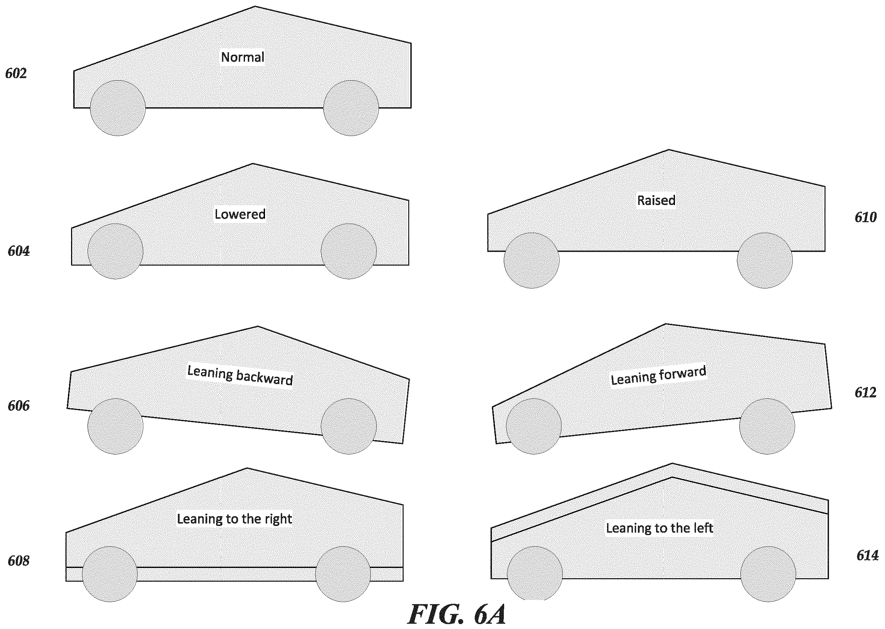

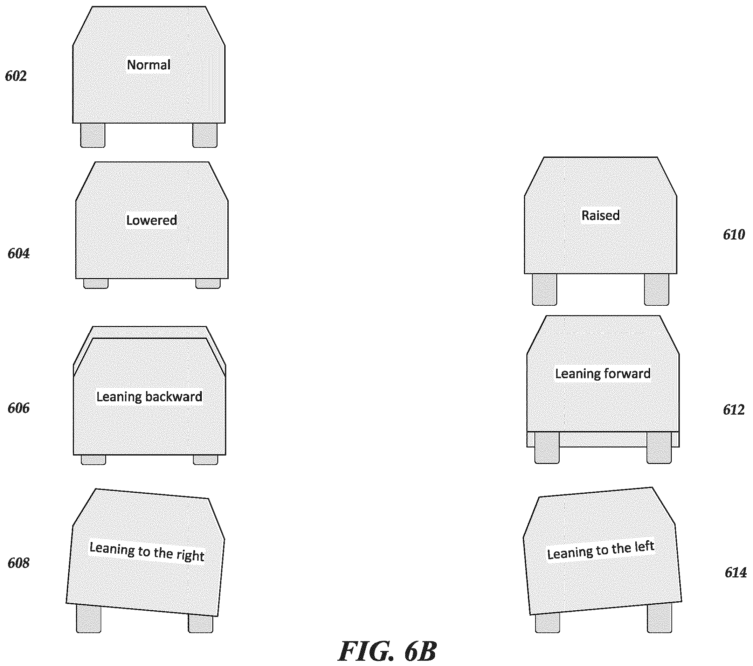

FIGS. 6A and 6B illustrate various positions 602 (e.g., a normal position), 604 (e.g., a lowered position), 606 (e.g., a leaning backward position), 608 (e.g., a leaning to the right position), 610 (e.g., a raised position), 612 (e.g., a leaning forward position), and 614 (e.g., a leaning to the left position) associated with the electric vehicle 412 for adjusting a wireless charging parameter (e.g., a coupling coefficient between the ground pad 302 and the vehicle pad coil 408) associated with the electric vehicle 412. In some implementations, the charging configuration controller 306 may cause the air suspension system 308 to adjust the electric vehicle 412 to the various positions 602, 604, 606, 608, 610, 612, and 614 to adjust the coupling coefficient, as noted at block 510.

FIG. 6A illustrates side views of the electric vehicle 412 being in the position 602, the position 604, the position 606, the position 608, the position 610, the position 612, and the position 614. FIG. 6B illustrates rear views of the electric vehicle 412 being in the position 602, the position 604, the position 606, the position 608, the position 610, the position 612, and the position 614. In some implementations, the electric vehicle 412 may be at the position 602 before the procedure 500 is performed. When the charging configuration controller 306 determines at block 510 that the coupling coefficient is sub-optimal, the charging configuration controller 306 may cause the air suspension system 308 to adjust the electric vehicle 412 from the position 602 to the position 604, the position 606, the position 608, the position 610, the position 612, or the position 614.

For example, the charging configuration controller 306 may cause the air suspension system 308 of the electric vehicle 412 to adjust the electric vehicle 412 from the position 602 to the position 604 (e.g., lowering the height of the electric vehicle 412) such that the vehicle pad coil 408 of the vehicle pad 304 is closer to a ground pad coil of the ground pad 302, thereby increasing the coupling coefficient between the vehicle pad 304 and the ground pad 302.

As another example, the charging configuration controller 306 may cause the air suspension system 308 to adjust the electric vehicle 412 from the position 602 to the position 610 (e.g., raising the height of the electric vehicle 412) to increase the coupling coefficient. As yet another example, the charging configuration controller 306 may cause the air suspension system 308 to adjust an angle of the vehicle pad 304 with respect to the ground pad 302 by adjusting the electric vehicle 412 from the position 602 to the position 606, the position 612, the position 608, or the position 614.

Although not illustrated in FIGS. 6A and 6B, the charging configuration controller 306 may alternatively and/or additionally adjust a position of the electric vehicle 412 such that the electric vehicle 412 may move forward or backward (e.g., move laterally) with respect to a ground pad 302 to increase the coupling coefficient. For example, the charging configuration controller 306 may cause wheels of the electric vehicle 412 to rotate forward or backward so as to move the electric vehicle 412 laterally relative to the ground pad 302 to adjust the coupling coefficient. The charging configuration controller 306 can use autonomous and/or semiautonomous driving features of the electric vehicle 412 to cause such movement.

## Additional Example Operations

In some examples, the wireless charging system 300 can perform real-time and/or periodic monitoring of wireless charging parameter(s), such as the coupling coefficient, to improve charging performance (e.g., charging efficiency during an active charging session). For example, the charging configuration controller 306 can periodically re-evaluate the coupling coefficient or other relevant wireless charging parameter(s) at predetermined intervals (e.g., every few seconds, minutes, and/or based on a detected event). Advantageously, this periodic checking enables the wireless charging system 300 to detect degradation in wireless power transfer efficiency that may result from dynamic changes in the environment or vehicle state, such as temperature fluctuations, suspension sag, or shifting vehicle load.

More specifically, during a charging session, the wireless charging system 300 (e.g., the charging configuration controller 306) may detect that the coupling coefficient of the electric vehicle 412 has decreased below a threshold (e.g., due to thermal expansion of vehicle components, changes in the suspension geometry caused by gradual air loss, and/or redistribution of weight within the vehicle). Upon detecting such degradation, the charging configuration controller 306 can automatically initiate a suspension adjustment procedure. The suspension adjustment procedure may include modifying the height and/or angle of the vehicle pad 304 relative to the ground pad 302 to restore, improve, or optimize the coupling coefficient and, consequently, the wireless power transfer efficiency.

In some examples, the wireless charging system 300 (e.g., the charging configuration controller 306) can be configured to implement a suspension modification procedure between periodic checks on wireless charging parameter(s). For example, the charging configuration controller 306 may apply a linear or non-linear adjustment to a height of the electric vehicle 412 to compensate for expected or measured sag associated with the air suspension system 308. This can be achieved by incrementally increasing the air pressure in the air suspension system 308 or by adjusting suspension actuators according to a predefined profile or algorithm that models expected sag based on vehicle mass, temperature, and/or elapsed time after the start of charging. In other examples, between periodic checks on wireless charging parameter(s), the charging configuration controller 306 can cause the air suspension system 308 to adjust an angle of the electric vehicle 412 relative to the ground. For example, the charging configuration controller 306 may selectively adjust the height of one or more corners or axles of the electric vehicle 412, using the air suspension system 308, to tilt the electric vehicle 412 forward, backward, or laterally (side-to-side). This angular adjustment can be performed independently or in combination with height adjustments to optimize the spatial relationship between the vehicle pad 304 and the ground pad 302.

Advantageously, such adjustments can real-time and/or proactive in nature so as to help maintain or achieve improved coil alignment (e.g., alignment between the ground pad 302 and the vehicle pad 304) and coupling coefficient before significant degradation on wireless charging parameter(s) is detected.

## Conclusion

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

**Claims**

1. A wireless charging system comprising:

   a first coil; and
   a charging configuration controller comprising circuitry configured to cause a parameter adjustment procedure to be performed, the parameter adjustment procedure comprising:

   determining a wireless charging parameter associated with wireless power transfer between the first coil and a second coil, wherein the first coil is wirelessly coupled with the second coil;

detecting that the wireless charging parameter is outside of a predetermined range of values; and responsive to the detecting, causing a vehicle to adjust a position of the second coil relative to the first coil.

2. The wireless charging system of Claim 1, wherein the wireless charging parameter is a coupling coefficient between the first coil and the second coil.

3. The wireless charging system of Claim 1 or 2, wherein the determining the wireless charging parameter comprises one or both of:

   perturbing the first coil using one or more electrical signals to determine self-inductance of the second coil; and perturbing the second coil using one or more electrical signals to determine self-inductance of the first coil.

4. The wireless charging system of any one of the preceding Claims, wherein the causing the vehicle to adjust the position of the second coil relative to the first coil comprises adjusting a height of the second coil relative to the first coil using an air suspension system of the vehicle.

5. The wireless charging system of any one of the preceding Claims, wherein the causing the vehicle to adjust the position of the second coil relative to the first coil comprises adjusting an angle of the second coil relative to the first coil using an air suspension system of the vehicle, in particular wherein the adjusting the angle of the second coil relative to the first coil causes the second coil to be substantially parallel to the first coil and/or the adjusting the angle of the second coil relative to the first coil comprises controlling one axle of the vehicle.

6. The wireless charging system of any one of the preceding Claims, wherein the causing the vehicle to adjust the position of the second coil relative to the first coil comprises causing the vehicle to move laterally relative to a ground pad and/or increasing a distance between the second coil and the first coil.

7. The wireless charging system of any one of the preceding Claims, wherein the parameter adjustment procedure further comprises:
   detecting that the wireless charging parameter is within the predetermined range of values; and responsive to the detecting that the wireless charging parameter is within the predetermined range of values, maintaining the position of the second coil relative to the first coil.

8. The wireless charging system of any one of the preceding Claims, wherein the circuitry is configured to iterate the parameter adjustment procedure until the wireless charging parameter is within the predetermined range of values.

9. The wireless charging system of any one of the preceding Claims, wherein the first coil is included in a ground pad, and wherein the second coil is included in a vehicle pad, in particular wherein at least a portion of the charging configuration controller is included in the vehicle pad.

10. A method of wireless charging, the method comprising:

   determining a wireless charging parameter associated with wireless power transfer between a first coil of a ground pad and a second coil of a vehicle, wherein the first coil is wirelessly coupled with the second coil; detecting that the wireless charging parameter is outside of a predetermined range of values; and responsive to the detecting, causing the vehicle to adjust a position of the second coil relative to the first coil such that wireless power transfer between the first coil and the second coil occurs with the second coil at the adjusted position.

11. The method of Claim 10, wherein the wireless charging parameter is a coupling coefficient between the first coil and the second coil.

12. The method of Claim 10 or 11, wherein the determining the wireless charging parameter comprises perturbing the first coil using one or more electrical signals to determine self-inductance of the second coil.

13. The method of any one of Claims 10 to 12, wherein the causing the vehicle to adjust the position of the second coil relative to the first coil uses an air suspension system of the vehicle.

**14.** The method of any one of Claims 10 to 13, wherein causing the vehicle to adjust the position of the second coil relative to the first coil comprises raising a height of the second coil relative to the first coil.

**15.** A charging configuration controller comprising circuitry configured to cause a parameter adjustment procedure to be performed, the parameter adjustment procedure comprising:

determining a wireless charging parameter associated with wireless power transfer between a first coil and a second coil, wherein the first coil is wirelessly coupled with the second coil;
detecting that the wireless charging parameter is outside of a predetermined range of values; and
responsive to the detecting, causing a vehicle to adjust a position of the second coil relative to the first coil.

*FIG. 1A*

100

FIG. 1B

*FIG. 2*

**FIG. 3**

FRONT SIDE

412

440

450

AIR SUSPENSION SYSTEM
308

460

VEHICLE
PAD
304

CHARGING
CONFIGURATION
CONTROLLER
306

REAR SIDE

*FIG. 4A*

EP 4 707 042 A1

**FIG. 4B**

**FIG. 4C**

*500* **PARAMETER ADJUSTMENT PROCEDURE**

*502* DETERMINE OR ESTIMATE A COUPLING COEFFICIENT

*504* COMPARE THE COUPLING COEFFICIENT TO VALID VALUES

*506* COUPLING COEFFICIENT IS SUB-OPTIMAL?

NO

YES

*508* COMMENCE A WIRELESS CHARGING SESSION

*510* CAUSE AN AIR SUSPENSION SYSTEM TO ADJUST A HEIGHT AND/OR AN ANGLE OF A VEHICLE PAD

*FIG. 5*

602 — Normal

604 — Lowered

610 — Raised

606 — Leaning backward

612 — Leaning forward

608 — Leaning to the right

614 — Leaning to the left

*FIG. 6A*

602 Normal

604 Lowered

606 Leaning backward

608 Leaning to the right

610 Raised

612 Leaning forward

614 Leaning to the left

*FIG. 6B*

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/249299 A1 (SHIJO TETSU [JP] ET AL) 26 September 2013 (2013-09-26) | 1,2,4,6, 7,9-11, 13-15 | INV. B60L53/00 B60L53/12 |
| Y | * paragraphs [0035], [0037], [0057], [0059], [0067], [0076] * <br> * paragraph [0082] - paragraph [0084] * <br> * figures 1, 5, 12 * <br> ----- | 3,5,8,12 | B60L53/122 B60L53/126 B60L53/36 B60L53/38 H02J50/12 |
| Y | CN 116 424 119 A (CHINA FAW GROUP CORP) 14 July 2023 (2023-07-14) <br> * abstract * <br> * paragraph [0007] * <br> ----- | 3,12 | H02J50/80 H02J50/90 |
| Y | US 2018/037126 A1 (JANG JIN SU [KR] ET AL) 8 February 2018 (2018-02-08) <br> * paragraphs [0141], [0158] * <br> * figures 5, 6 * <br> ----- | 5,8 | |

**TECHNICAL FIELDS SEARCHED (IPC)**

B60L
H02J

The present search report has been drawn up for all claims

| Place of search | Date of completion of the search | Examiner |
|---|---|---|
| The Hague | 19 November 2025 | Lutz, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0064

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2025

| Patent document cited in search report | Publication date | Patent family member(s) | Publication date |
|---|---|---|---|
| US 2013249299 A1 | 26-09-2013 | JP    5749208 B2<br>JP  2013201867 A<br>US  2013249299 A1<br>US  2017170690 A1 | 15-07-2015<br>03-10-2013<br>26-09-2013<br>15-06-2017 |
| CN 116424119 A | 14-07-2023 | NONE | |
| US 2018037126 A1 | 08-02-2018 | CN     107696884 A<br>DE 102017117861 A1<br>US  2018037126 A1 | 16-02-2018<br>08-02-2018<br>08-02-2018 |

EPO FORM P0459

For more details about this annex : see Official Journal of the European Patent Office, No. 12/82

**EP 4 707 042 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63692435
- US 2024017446 W